# EUROPEAN PATENT APPLICATION

(11) **EP 0 719 955 A1**
(43) Date of publication of application: **03.07.1996**
(21) Application number: 95118648.5
(22) Date of filing: 27.11.1995
(51) Int. Cl.: F16D 13/08, F16D 41/20

(54) **Device for driving a roller shaft or the like in rotation**

(30) Priority: 26.12.1994 JP 336761/94; 17.10.1995 JP 293317/95
(71) Applicant: PARTNER SANGYO KABUSHIKI KAISHA, Yokohama-shi, Kanagawa-ken (JP)
(72) Inventor: Ninomiya, Taiji, Setagaya-ku, Tokyo (JP); Aono, Kazukata, Kohoku-ku, Yokohama-shi, Kanagawa-ken (JP); Utsumi, Kiyoshi, Yokohama-shi, Kanagawa-ken (JP); Kase, Takao, Kawasaki-shi, Kanagawa-ken (JP)
(74) Representative: Zipse + Habersack

(57) **Abstract**

Here is disclosed a device for driving a roller shaft (1) or the like in rotation comprising a gear section (3) having integrally therewith a cylindrical bearing (5) rotatable relative to the roller shaft extending therethrough and a cap section (4) having a cylindrical bearing (6) adapted to be rotatable integrally with the roller shaft also extending therethrough by means of keyed interlocking (8), the device being characterized by that the respective cylindircal bearings associated with the gear and cap sections, respectively, are formed with butt sections (13,14) adapted to butt against each other leaving a groove (15) therebetween; the respective butt sections of the cylindrical bearings are inserted from opposite sides into a sleeve type joint (11) having inwardly projecting ring (12) adapted to be received by the groove; and a coil spring (10) wound around the cylindrical bearings has, at an intermediate position of its length, a turn placed at an angle with respect to the vertical, i.e., having a relatively large pitch. The sleeve type joint (11) is formed on its outer peripheral surface with a plurality of projections (16) functioning to prevent the coil spring form shifting in the direction of the roller shaft.

## Description

### Background of the Invention

### Technical Field

The present invention relates to a device for rotationally driving a roller shaft or the like generally used as feeder or taker-in means in apparatus such as copying machine or facsimile terminal equipment.

### Prior Art

Such device for driving roller shaft or the like in rotation is well known and an example thereof comprises a gear section having integrally therewith a cylindrical bearing being rotatable relative to a roller shaft extending therethrough and a cap section having a cylindrical bearing adapted to be rotatable integrally with the roller shaft also extending therethrough by means of keyed interlocking, wherein the respective cylindrical bearing of said gear and cap sections are butted against each other and a coil spring is arranged to extend around these two cylindrical bearings with one end of said coil spring anchored thereon so that a driving force serving to rotate the roller shaft only in one direction be transmitted from a drive source to the roller shaft.

In such driving device of well known art, positioning of the gear section and the cap section relies on a retaining ring or the like fixed on the roller shaft and a clearance has inevitably been left between the retaining ring and the gear section or the cap section. Consequently, a gap has been left also between the cylindrical bearings and the coil spring has sometimes been caught in this gap. To avoid such inconvenience that the coil spring may be caught by said gap, an improved device for driving the roller shaft or the like in rotation has been proposed in which the coil spring is provided at an intermediate position of its length with a turn placed at an angle with respect to the vertical, i.e., having a relatively large pitch (Japanese Utility Model Application Disclosure Gazette No. 1994 -32769).

Power transmission by such device for rotationally driving the roller shaft or the like generally relies upon a principle that a tensile force of the coil spring is converted to a tightening force as the coil spring is rotated. In the case of the improved device as mentioned above, a force component of said tensile force tends to shift the coil spring transversely and thereby to deform the larger pitch turn thereof. As a result, there is an apprehension that said larger pitched turn of the coil spring may be caught by said gap. This apprehension will be serious particularly when the device for driving the roller shaft or the like is operated at a high speed for a long period.

To solve this problem, it is well known from Japanese Utility Model Application Disclosure Gazette No. 1994 - 73464 to dispose a thin-wall cylindrical collar between said gear section and said cap section and it is also well known from Japanese Utility Model Publication No. 1994 - 40339 that said gear and cap sections are partially diameter-reduced in the proximity of the position at which these gear and cap sections butt against each other and a collar is mounted around these diameter-reduced portions.

However, these devices of prior art have left problems behind. In the case of the former, the thin-wall cylindrical collar axially shifts and generates a gap between the gear section and the cap section. In consequence, there remains an apprehension that the coil spring may be caught by this gap. Also in the case of the latter, a gap is generated between the collar and the gear section or the cap section and the coil spring may be caught by this gap. Once the coil spring has been caught by the gap during operation at a high speed, the coil spring will widen the gap and make a normal operation impossible.

### Summary of the Invention

In view of the problems left by the prior art behind as have been described above, it is a principal object of the invention to provide a novel device for driving a roller shaft or the like in rotation adapted to keep effective and reliable power transmission even when the device is operated at a high speed for a long period.

The object set forth above is achieved, according to the invention, by a device for driving a roller shaft or the like in rotation comprising a gear section having integrally therewith a cylindrical bearing rotatable relative to the roller shaft extending therethrough and a cap section having a cylindrical bearing rotatable integrally with the roller shaft also extending therethrough by means of keyed interlocking, said device being characterized by that the respective cylindrical bearings associated with said gear and cap sections, respectively, are formed with butt sections adapted to butt against each other leaving a groove therebetween; the respective butt sections of the cylindrical bearings are inserted from opposite sides into a sleeve type joint having inwardly projecting ring adapted to be received by said groove; and a coil spring wound around the cylindrical bearings has, at an intermediate position of its length, a turn placed at an angle with respect to the vertical, i.e., having a relatively large pitch.

Preferably, said sleeve type joint is formed on its outer peripheral surface with a plurality of small projections functioning to prevent the coil spring from shifting in the direction of the roller shaft.

Preferably, said sleeve type joint is configured to be as thin as approximately 0.6 mm and tapered toward its axially opposite ends.

Preferably, said sleeve type joint is dimensioned so that it can be mounted around said groove through the intermediate large-pitched turn of the coil spring.

Preferably, said sleeve type joint is made of wear-resistant synthetic resin.

The inventive device constructed as has been described above eliminates an apprehension that a gap might be generated between the respective cylindrical bearings and the sleeve type joint might shift in the direction of the roller shaft because of the unique arrangement such that the respective cylindrical bearings associated with the gear and cap sections are inserted from opposite sides into the sleeve joint formed with the inwardly projecting ring adapted to be received by the groove between said respective cylindrical bearings and the coil spring has at an intermediate position of its length a turn placed at an angle with respect to the vertical, i.e., having a relatively large pitch. In this manner, the inventive device allows its power transmission to be effectively and reliably maintained even during operation at a high speed for a long period.

A plurality of small projections formed on the outer peripheral surface of said sleeve type joint advantageously function to prevent the coil spring from shifting in the direction of the roller shaft and any other directions.

### Brief Description of the Drawings

Fig. 1 is a front view showing a paper feeding roller equipped with an embodiment of the inventive device as partially cut away;
Fig. 2 is a sectional view showing, in an enlarged scale, said embodiment of the inventive device;
Fig. 3 is a view similar to Fig. 1 but showing a paper feeding roller equipped with another embodiment of the inventive device as partially cut away;
Fig. 4 is a sectional view showing the embodiment shown by Fig. 3;
Fig. 5 is an exploded view showing the embodiment shown by Fig. 3 as partially cut away; and
Fig. 6 is a perspective view showing a sleeve type joint used in the embodiment shown by Fig. 3.

### Description of the Preferred Embodiment

Details of the invention will be readily understood from the following description of presently preferred embodiments made in reference with the accompanying drawings.

Reference numeral 1 designates a roller shaft on which a roller 2 is mounted. The roller shaft 1 is provided at an end with a gear section 3 and a cap section 4.

The gear section 3 includes integrally therewith a cylindrical bearing 5 through which the roller shaft 1 extends rotatably relative thereto. The gear section 3 is engaged with a driving gear 7 serving as a drive source.

The cap section 4 also includes integrally therewith a cylindrical bearing 6 through which the roller shaft 1 extends in such a manner that the cap section 4 and the roller shaft 1 can be interlocked by a key 8 and thereby integrally rotated. While the cap section 4 and the roller shaft 1 are shown to be interlocked by means of the key 8, a portion of the roller shaft 1 to be interlocked with the cap section 4 may be configured to be D-shaped or polygonal shaped in cross-section, on one hand, and the inner side of the cap section 4 may be correspondingly configured, on the other hand, to interlock these two components so as to be rotated integrally with each other.

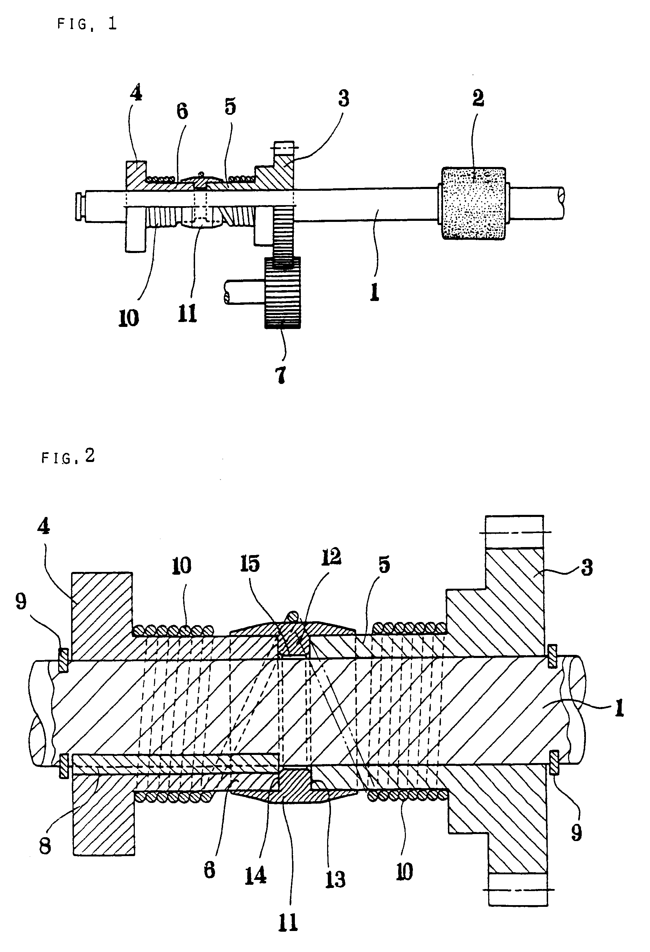

Said gear section 3 and cap section 4 are positioned with their respective cylindrical bearings 5, 6 butted against each other and maintained at this relative position by a retaining ring 9 mounted on the roller shaft 1. According to the specific embodiment shown by Figs. 1 and 2, said respective cylindrical bearings 5, 6 are formed with butt sections 13, 14 defining therebetween a groove 15 adapted to receive an inwardly projecting ring as a part of a sleeve type joint as will be described later. Reference numeral 11 designates this sleeve type joint characterizing the invention, which is substantially cylindrical and made of wear-resistant synthetic resin such as ABS resin, polycarbonate or polyacetal or suitable metallic material. The sleeve type joint 11 is as thin-walled as approximately 0.6 mm and formed at its axially intermediate portion with an inwardly projecting ring 12 destined to be received by the groove 15 defined between the butt sections 13, 14 of the cylindrical bearings 5, 6. The respective ends of the cylindrical bearings 5, 6 are inserted into the sleeve type joint 11 from its opposite openings. The sleeve type joint 11 is tapered toward its axially opposite ends to become progressively thinner, as seen in Fig. 2. A coil spring 10 is wound around these cylindrical bearings 5, 6 and the sleeve type joint 11. While one end of this coil spring 10 on the side of the cap section 4 may be anchored on one of the cylindrical bearings 5, 6, a tightening force of the spring allows the spring to effectively operate without anchoring.

The coil spring 10 has, at an intermediate position of its length, a turn placed at an angle with respect to the vertical, i.e., having a relatively large pitch so that this turn lies just around the sleeve type joint 11. The sleeve type joint 11 may be dimensioned so as to be mounted around said groove through said large-pitched turn of the coil spring 10 in order to facilitate the sleeve type joint to be easily mounted around said groove.

In the embodiment of the inventive device arranged as has been described above, the driving force from the driving gear 7 rotates the gear section 3 in the direction of tightening the coil spring 10 and a tightening force of the coil spring 10 transmits a rotating force to the cap section 4, by which the roller shaft 1 is rotated, as in the device of prior art. When the cap section 4 is rotated in the direction of relaxing the coil spring 10, no rotating force is transmitted to the roller shaft 1. During such operation, the inwardly projecting ring 12 of the sleeve type joint 11 received by the groove defined between the two cylindrical bearings 5, 6 prevents the sleeve type joint from axially shifting and the coil spring from being caught by a gap.

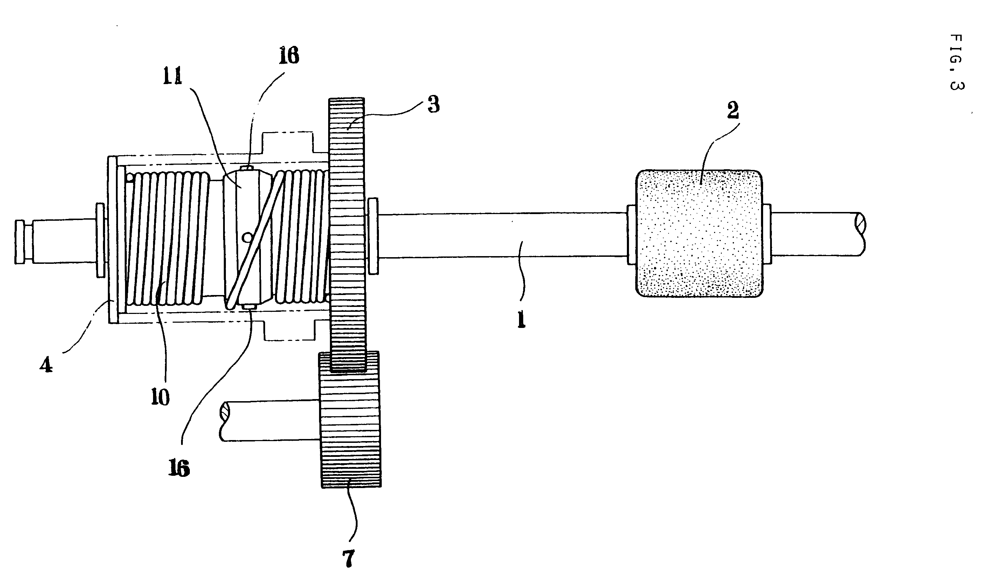

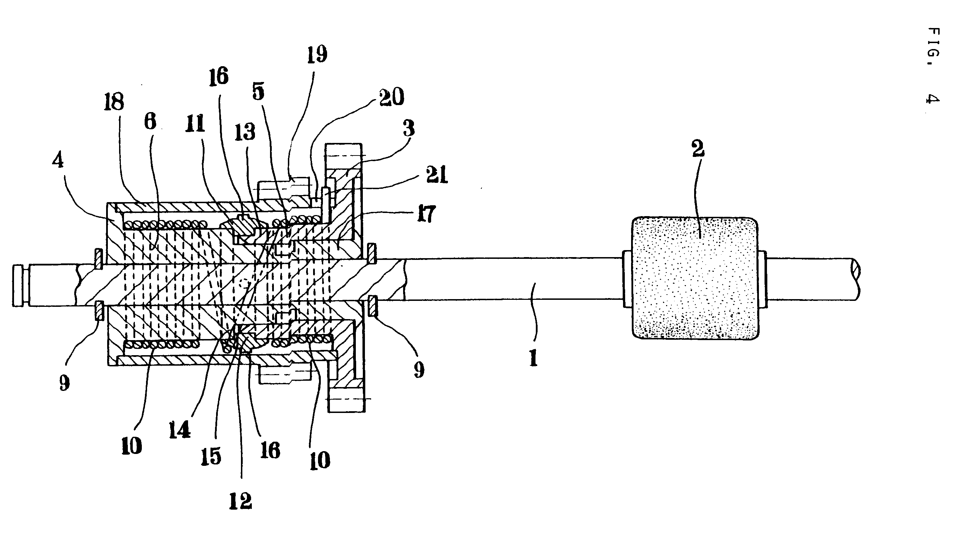

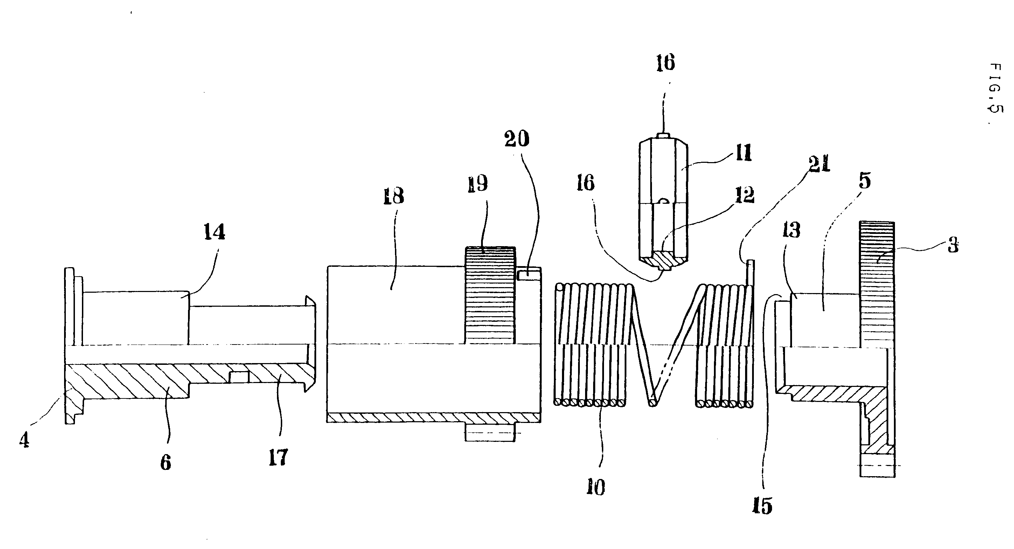

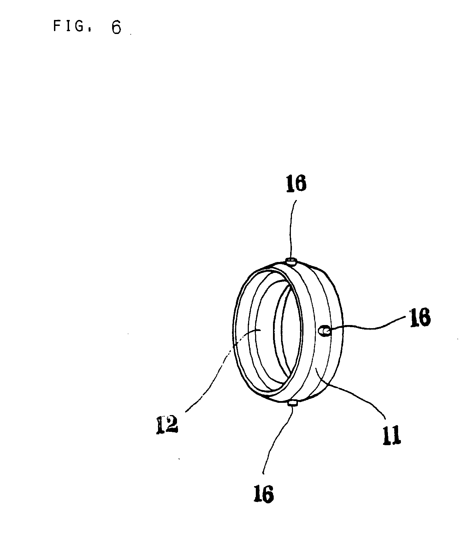

Figs. 3 through 6 illustrate further preferred embodiment of the invention, in which various components similar to those in Figs. 1 and 2 are designated by similar reference numerals.

According to this embodiment, the sleeve type joint 11 is formed on its outer peripheral surface with a plurality of small projections 16 functioning to lock the coil spring 10 and thereby to prevent the coil spring 10 from axially shifting.

An end of the cylindrical bearing 5 associated with the gear section 3 is formed with diameter-reduced butt section 13 and, similarly, the cylindrical bearing 6 associated with the cap section 4 is formed with a diameter-reduced butt section 14 so that a forward end 17 of the diameter-reduced butt section 14 which has a diameter smaller than the butt section 14 may extend through the cylindrical bearing 5 of the gear section 3. These butt sections 13, 14 define therebetween the groove 15 adapted to receive the inwardly projecting ring 12 of the sleeve type joint 11.

Reference numeral 18 designates a control tube formed on its outer peripheral surface with teeth 19 and formed on its inlet end facing the gear section 3 with a stopper in the form of a notch 20 adapted to receive a rising section 21 of the coil spring 10. So long as no external force is exerted upon the control tube 18, the gear section 3 and the cap section 4 are integrally rotated and thereby the roller shaft 1 is rotationally driven. When a control pawl (not shown) comes in engagement with the teeth 19, the control tube 18 is engaged with the rising section 21 of the coil spring 10 so as to relax the coil spring 10 and neither the cap section 4 nor the roller shaft 1 can be rotated.

### Effect of the Invention

As will be understood from the foregoing description, the inventive device eliminates an apprehension that the sleeve type joint might axially shift and the spring might be caught by any gap, since the coil spring has, at an intermediate position of its length, a turn placed at an angle with respect to the verticval, i.e., having a relatively large pitch, the sleeve type joint is disposed between the two cylindrical bearings so that said large-pitched turn of the coil spring may lie just around said sleeve type joint and the inwardly projecting ring of the sleeve type joint may be received by the groove between the cylindrical bearings. In this manner, an effective and reliable power transmission is assured even during operation at a high speed for a long period. Additionally, the coil spring may be formed by a low cost round spring instead of a high cost leaf spring, decreasing a cost of the device as a whole.

The small projections formed on the outer peripheral surface of the sleeve type joint prevents the coil spring from shifting in the direction of the roller shaft and other directions, assuring a further reliable power transmission.

## Claims

1. Device for driving a roller shaft or the like in rotation comprising a gear section (3) having integrally therewith a cylindrical bearing (5) rotatable relative to the roller shaft (1) extending therethrough and a cap section (4) having a cylindrical bearing (6) adapted to be rotatable integrally with the roller shaft also extending therethrough by means of keyed interlocking (8), said device being characterized by that the respective cylindrical bearings (5,6) associated with said gear and cap sections, respectively, are formed with butt sections (13,14) adapted to but against each other leaving a groove (15) therebetween; the respective butt sections of the cylindrical bearings are inserted from opposite ends into a sleeve type joint (11) having inwardly projecting ring (12) adapted to be received by said groove; and a coil spring (10) wound around the cylindrical bearings has, at an intermediate position of its length, a turn placed at an angle with respect to the vertical, i.e., having a relatively large pitch.

2. Device for driving a roller shaft or the like in rotation according to claim 1, wherein said sleeve type joint (11) is formed on its outer peripheral surface with a plurality of small projections (16) functioning to prevent the coil spring from shifting in the direction of the roller shaft.

3. Device for driving a roller shaft or the like in rotation according to claim 1 or 2, wherein said sleeve type joint (11) is configured to be as thin as approximately 0,6 mm and tapered toward its longitudinally opposite ends.

4. Device for driving a roller shaft or the like in rotation according to any of the claims 1 through 3, wherein said sleeve type joint (11) is dimensioned so that it can be mounted around said groove (15) through the intermediate large-pitched turn of the coil spring.

5. Device for driving a roller shaft or the like in rotation according to any of the claims 1 throug 4, wherein said sleeve type joint (11) is made of wear-resistant synthetic resin.
